# EUROPEAN PATENT APPLICATION

(11) **EP 1 296 445 A1**
(43) Date of publication of application: **26.03.2003**
(21) Application number: 01921957.5
(22) Date of filing: 20.04.2001
(51) Int. Cl.: H02P 7/63

(54) **MAGNETIC BEARING CONTROLLER**

(30) Priority: 21.04.2000 JP 2000121583
(71) Applicant: EBARA CORPORATION, Ohta-ku, Tokyo 144-8510 (JP)
(72) Inventor: TAIRA, Akiko, Fujisawa-shi, Kanagawa 252-0804 (JP); NAKAZAWA, Toshiharu, Chigasaki-shi, Kanagawa 253-0027 (JP)
(74) Representative: Wagner, Karl H., Dipl.-Ing.
(86) International application number: PCT/JP01/03407
(87) International publication number: WO 01/082466

(57) **Abstract**

A magnetic bearing control device that can operate a motor with low noise, has a simple system construction and is compact and inexpensive comprises at least a pair of opposing electromagnets for supporting a suspended object without contact, a motor M for rotating the suspended object and a controller for driving and controlling those. A DC/DC converter 13 supplies a driving power to an inverter 14 for driving the motor M. The inverter 14 for driving the motor M utilizes both PWM and PAM control modes to rotatably drive the motor M.

## Description

### TECHNICAL FIELD

The present invention relates to a magnetic bearing control device for suspending an object by an electromagnetic force.

### BACKGROUND ART

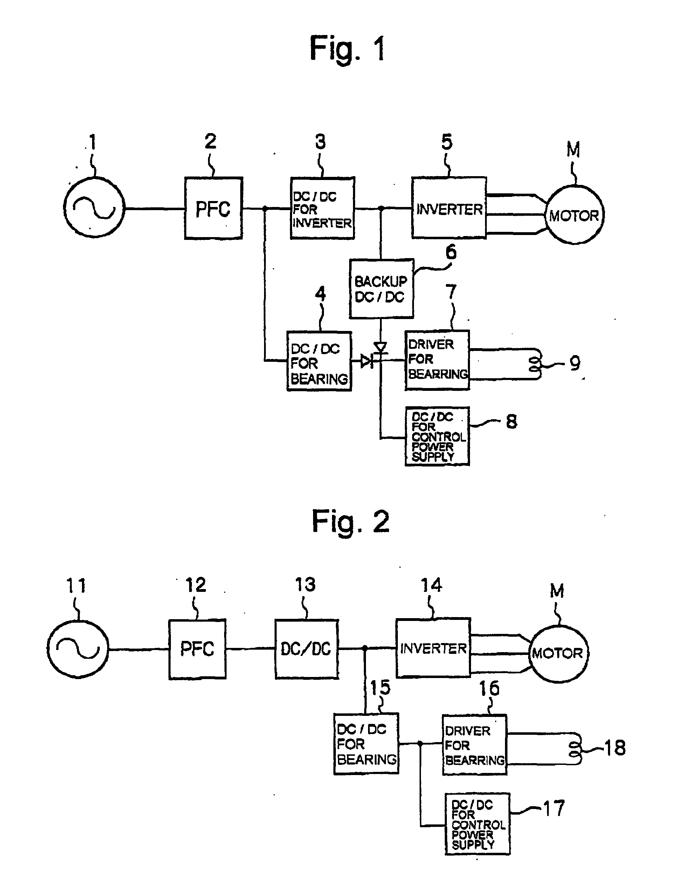

Figure 1 shows the construction of a conventional magnetic bearing control device. An AC power is input from a commercial power supply 1 via a power factor control circuit (PFC) 2 to a DC/DC converter 3 for an inverter and a DC/DC converter 4 for the bearing. An output from the DC/DC converter 3 is supplied to an inverter 5, and an output from the inverter 5 is supplied to a motor M. An output from the DC/DC converter 4 is supplied to a driver 7 for the bearing and a DC/DC converter 8 for the control power supply. An output from the driver 7 is supplied to each excitation coil 9 of at least a pair of opposing electromagnets (not shown) in a magnetic bearing. An output from the DC/DC converter 8 supplies an appropriate voltage to an electronic circuit (not shown) in the device. Thus, an object (not shown) is suspended by electromagnetic forces and rotated by a torque of the motor M.

During an electric current is cut off, a power generated by the motor M controls a frequency of the inverter 5 to control the regenerative voltage to be constant and is supplied to a backup DC/DC converter 6 for the purpose of regenerative power utilization. An output from the backup DC/DC converter 6 is supplied to the DC/DC converter 8 and the driver 7 to decelerate the suspended object, while supported without contact, until a safe level of rotation (i.e. a level of rotation that allows safe support by a touchdown bearing) is reached.

In the case where the inverter 5 is operated in a PAM (pulse amplitude modulation) control mode on the magnetic bearing control device, the DC/DC converter 3 supplies a gradually increasing voltage to the inverter 5 from a start, and the voltage is supplied to the motor M after frequency-converted by the inverter 5. The PAM control mode generally generates a low noise but generates a high ripple current, resulting in problems in efficiency, a torque ripple and the like. There is also a problem of a decreased input power factor at low voltage.

When the inverter 5 is operated in a PWM (pulse width modulation) control mode, the DC/DC converter 3 supplies a constant voltage to the inverter 5, and the constant voltage is pulse-modulated and frequency-converted by the inverter 5 and supplied to the motor M. The PWM control mode is generally superior in response in accelerating and decelerating operations, but inferior in magnitude of the motor M noise to the PAM control mode.

For the conventional magnetic bearing control device above-described uses a lot of converters for power supply, such as the DC/DC converter 3, the DC/DC converter 4, the backup DC/DC converter 6 and the DC/DC converter 8. As a result, there is also such a problem that the device becomes large in size and is expensive and complex in system construction.

The present invention has been made in view of the above, and an aim of the present invention is to provide a magnetic bearing control device that can operate a motor with low noise, has a simple system construction and is compact and inexpensive.

### DISCLOSURE OF THE INVENTION

To achieve the object above, the invention according to claim 1 provides a magnetic bearing control device comprising:
at least a pair of opposing electromagnets for supporting an object to be suspended without contact;
a motor for rotating the suspended object; and
an inverter for rotatably driving the motor, the inverter selecting between a PWM control mode and a PAM control mode in accordance with a drive condition of the motor.

The PWM control mode is generally superior in response in accelerating and decelerating operations, but inferior in noise of the motor to the PAM control mode. The PAM control mode generally produces low noise, but generates a high ripple current, resulting in problems in efficiency, a torque ripple and a low input power factor at low voltage. In the invention according to claim 1, as described above, the inverter uses both the PWM control mode and the PAM control mode to rotatably drive the motor. Thus, the motor is operated in the PWM control mode during the accelerating operation and in the PAM control mode during a rated operation, thereby allowing efficient operation with low noise.

The invention according to claim 2 provides a magnetic bearing control device according to claim 1, further comprising:
a driver (16) for the bearing for driving the electromagnets;
a DC/DC converter (15) for the bearing for supplying an output to the driver (16) for the bearing; and
a DC/DC converter (13) for supplying a driving power to the inverter (14) and the DC/DC converter (15) for the bearing,
wherein the DC/DC converter (13) outputs, to the DC/DC converter (15) for the bearing, a voltage equal to or higher than a bearing supporting voltage required for supporting the suspended object without contact, and wherein the DC/DC converter (15) for the bearing outputs a constant bearing supporting voltage.

The invention according to claim 3 provides a magnetic bearing control device according to claim 1 or 2,
wherein an index by which the inverter selects between the PWM control mode and the PAM control mode is at least one of a duty ratio in the PWM mode and an output voltage of the inverter.

The invention according to claim 4 provides a magnetic bearing control device according to claim 1, further comprising:
a driver (16) for the bearing for driving the electromagnets; and
a DC/DC converter (13) for supplying a driving power to the inverter (14) and the driver (16) for the bearing,
wherein the DC/DC converter (13) outputs, to the driver (16) for the bearing, a voltage equal to a magnetic bearing supporting voltage required for supporting the suspended object without contact.

### BRIEF DESCRIPTION OF THE DRAWINGS

Figure 1 shows an example of the construction of a conventional magnetic bearing control device;
Figure 2 shows an embodiment of a magnetic bearing control device according to the invention;
Figure 3 illustrates the operation of the magnetic bearing control device shown in Figure 2;
Figure 4 shows another embodiment of a magnetic bearing control device according to the invention; and
Figure 5 illustrates the operation of the magnetic bearing control device shown in Figure 4.

### BEST MODE FOR CARRYING OUT THE INVENTION

Embodiments of the invention will be described below with reference to the drawings, exemplifying a case where the invention is applied to a turbo molecular pump. Figure 2 shows an embodiment of a magnetic bearing control device according to the invention. An AC power is input from a commercial power supply 11 via a power factor control circuit (PFC) 12 to a DC/DC converter 13. An output from the DC/DC converter 13 is supplied to an inverter 14 and a DC/DC converter 15 for the bearing. An output from the inverter 14 is supplied to a motor M. An output from the DC/DC converter 15 is supplied to a driver 16 for the bearing and a DC/DC converter 17 for control power supply. An output from the driver 16 is supplied to an excitation coil 18 of a electromagnet (not shown) in a magnetic bearing. An output from the DC/DC converter 17 supplies a proper voltage to electronic circuits (not shown) in the device. Thus, the object (not shown) is suspended without contact by electromagnetic forces and rotated by the motor M.

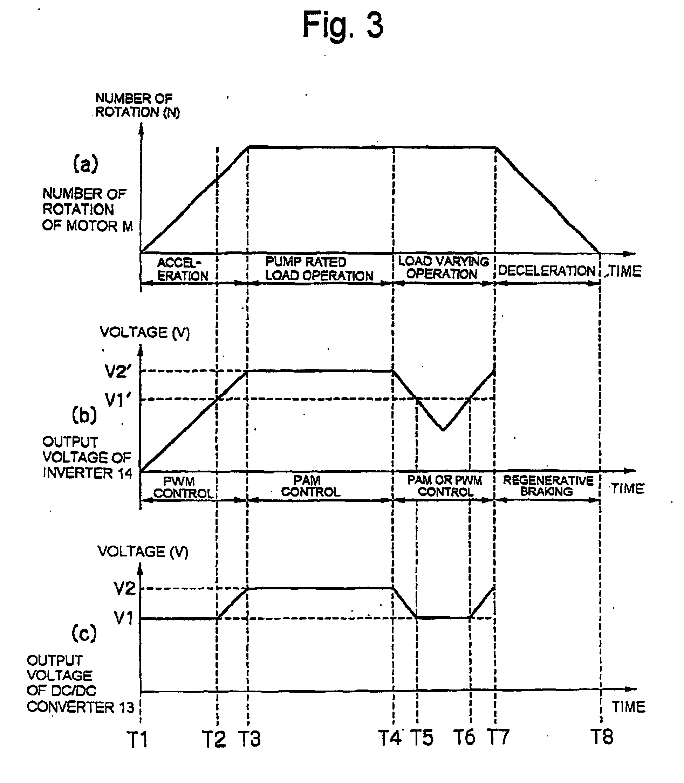

The output from the DC/DC converter 13 is supplied to the DC/DC converter 15 and the DC/DC converter 15 outputs, to the driver 16, a constant bearing supporting voltage for suspending the object without contact by the magnetic bearing electromagnets. When the motor M requires a voltage higher than the bearing supporting voltage for acceleration, the DC/DC converter 13 increases its output voltage. At that time, however, the bearing supporting voltage output from the DC/DC converter 15 is kept constant. Thus, the DC/DC converter 13 outputs a minimum voltage having a value which enables the DC/DC converter 15 to output the bearing supporting voltage required for the magnetic bearing electromagnets to support the suspended object without contact. The inverter 14 operates in a PWM control mode in a voltage increasing operation period of the DC/DC converter 15 (T1 to T2 in Figure 3) or during a part of a load varying period (T5 to T6 in Figure 3). The inverter 14 also operates in a PAM control mode in a voltage decreasing operation period of the DC/DC converter 15 (T4 to T5 and T6 to T7 in Figure 3).

During the electric current is cut off, a power generated by the motor M is supplied via the inverter 14 to the DC/DC converter 15 by controlling the frequency of the inverter 14 to keep the regenerative voltage constant, for the purpose of regenerative power utilization. An output from the DC/DC converter 15 is supplied to the DC/DC converter 17 and the driver 16 so as to decelerate the suspended object without contact until a safe level of rotation of the suspended object is reached.

Figure 3 explains the operation of the magnetic bearing control device shown in Figure 2. In Fig. 3, (a) shows a number of rotation of the motor M, (b) shows an output voltage of the inverter 14 and (c) shows the output of the DC/DC converter 13. As shown in (c) of Fig. 3, the DC/DC converter 13, when started at time T1, outputs a voltage V1 required for the magnetic bearing electromagnet to support the suspended object without contact. Then, the motor M is accelerated, and the DC/DC converter 15 continues outputting the bearing supporting voltage until the output from the inverter 14 reaches a voltage V1' (time T1 to T2). When the motor M is further accelerated and becomes to require a voltage equal to or higher than a voltage at which the magnetic bearing electromagnets support the suspended object without contact (time T2), the DC/DC converter 13 increases its output so as to output a voltage V2 required for a rated operation of a pump load (time T3).

During a period T1 to T2, the output voltage of the inverter 14 continues increasing, whereas the DC/DC converter 15 outputs the constant bearing supporting voltage required for the magnetic bearing electromagnets to support the suspended object without contact. In this period, the inverter 14 operates in the PWM control mode and turns to the PAM control mode at a time when a duty ratio in the PWM mode reaches a maximum.

After the time when the duty ratio in the PWM mode reaches the maximum (time T2) and during the rated operation period of the pump load (time T3 to T4), the inverter 14 operates in the PAM control mode and controls the output voltage.

During the load varying operation period (time T4 to T7), the inverter 14 operates in the PAM control mode during a period when its output voltage is equal to or higher than V1 (T4 to T5 and T6 to T7) and in the PWM control mode during a period when its output voltage is lower than V1 (time T5 to T6) so as to control the output voltage. It is noted that during the load varying operation period, the operation of the inverter 14 switches from the PWM mode to the PAM mode when the duty ratio in the PWM mode reaches the maximum and switches from the PAM mode to the PWM mode when the duty ratio in the PWM mode becomes equal to or lower than the maximum.

During the electric current is cut off (time T7 to T8), the motor M is decelerated by regenerative braking, as described above.

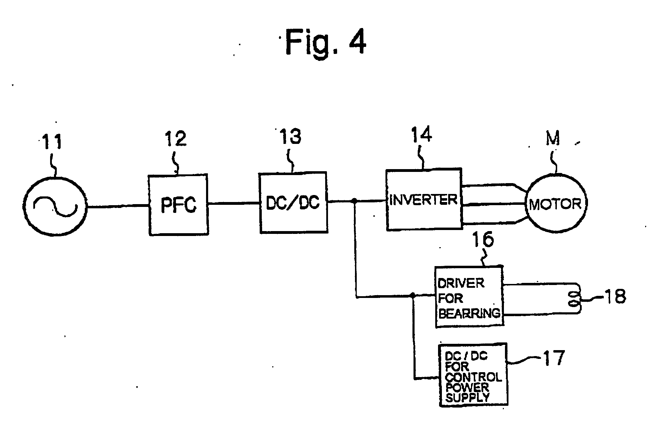

Figure 4 shows another embodiment of a magnetic bearing control device according to the invention. An AC power is input from a commercial power supply 11 via a power factor control circuit (PFC) 12 to a DC/DC converter 13. An output from the DC/DC converter 13 is supplied to an inverter 14 as well as to a driver 16 and a DC/DC converter 17. An output from the inverter 14 is supplied to a motor M. An output from the driver 16 is supplied to an excitation coil 18 of an electromagnet (not shown) in a magnetic bearing. An output from the DC/DC converter 17 supplies a proper voltage to electronic circuits (not shown) in the device. Thus, an object (not shown) is suspended without contact by electromagnetic forces and rotated by the motor M.

The DC/DC converter 13 outputs, to the driver 17, a bearing supporting voltage required for the magnetic bearing electromagnets to support the suspended object without contact. The inverter 14, receiving the bearing supporting voltage, operates in a PWM control mode during acceleration of the motor M and in a PAM control mode during a rated operation period of a pump load.

During an electric current is cut off, a power generated by the motor M is supplied via the inverter 14 to the DC/DC converter 17 and the driver 16 for the purpose of regenerative voltage utilization by controlling the frequency of the inverter 14 to control the regenerative voltage to be constant, thereby decelerating the suspended object, while supported without contact, until a safe level of rotation of the suspended object is reached.

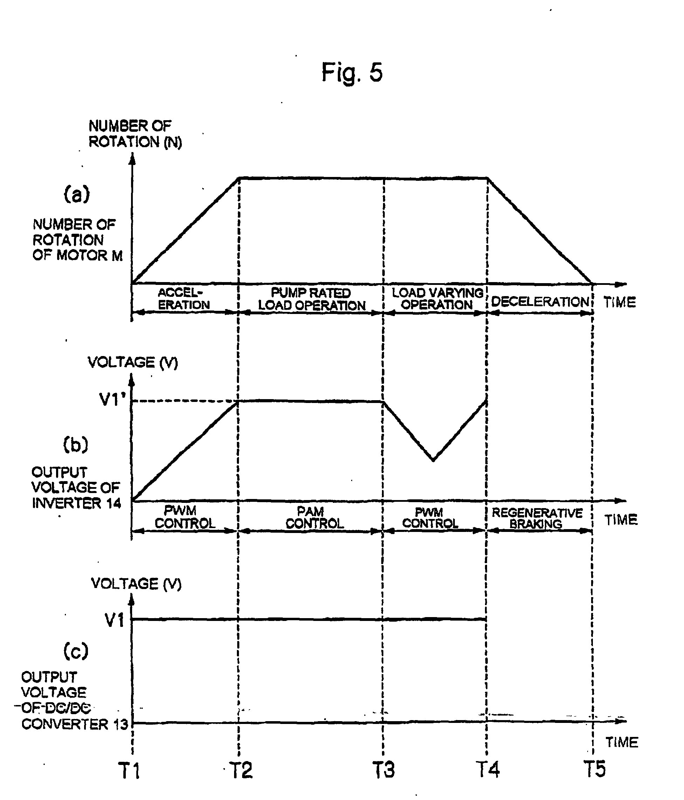

Figure 5 explains the operation of the magnetic bearing control device shown in Figure 4, where (a) shows a number of rotation of the motor M, (b) shows an output voltage of the inverter 14 and (c) shows the output of the DC/DC converter 13. As shown in (c) of Fig. 5, the DC/DC converter 13 outputs, to the inverter 14, the driver 16 and the DC/DC converter 17, a constant voltage V1 required for the electromagnets to support the suspended object without contact. During acceleration of motor M (time T2 to T2), the inverter 14 operates in the PWM control mode until its output voltage reaches V1' (time T2) and controls the output voltage. During the rated operation of the pump load (time T2 to T3), the inverter 14 operates in the PAM control mode and maintains the output voltage V1'.

During a load varying operation period(time T3 to T4), the inverter 14 operates in the PWM control mode and controls the output voltage. During the electric current is cut off (time T4 to T5), the motor M is decelerated by regenerative braking.

As described above, according to the embodiments of the magnetic bearing control device of the invention, the inverter 14 operates in the PWM control mode during the acceleration of the motor M and in the PAM control mode during the rated operation of the pump load. Consequently, the motor M can operate efficiently with low noise. It is noted that the present invention is not limited to the above described two embodiments, and various modifications and variations may be made by those skilled in the art without departing from the spirit and scope of the invention. For example, detection means for detecting a position of the suspended object may be provided in both of the embodiments.

### INDUSTRIAL APPLICABILITY

In a magnetic bearing control device according to the invention, as described above in detail, the inverter utilizes both PWM and PAM control modes to drive and rotate the motor. As a result, the motor is operated in the PWM control mode during an accelerating operation of the motor and in the PAM control mode during a rated operation, thereby allowing the motor to operate efficiently with low noise. Therefore. the present invention can be applied to vacuum pumps such as turbo molecular pumps.

## Claims

1. A magnetic bearing control device comprising:
at least a pair of opposing electromagnets for supporting an object to be suspended without contact;
a motor for rotating said suspended object; and
an inverter for rotatably driving said motor, said inverter selecting between a PWM control mode and a PAM control mode in accordance with a driving condition of said motor.

2. A magnetic bearing control device according to claim 1, further comprising:
a driver (16) for the bearing for driving said electromagnets;
a DC/DC converter(l5) for the bearing for supplying an output to said driver (16) for the bearing; and
a DC/DC converter (13) for supplying a driving power to said inverter (14) and said DC/DC converter (15) for the bearing.
wherein said DC/DC converter (13) outputs, to said DC/DC converter (15) for the bearing, a voltage equal to or higher than a bearing supporting voltage required for supporting said suspended object without contact, and wherein said DC/DC converter (15) outputs a constant bearing supporting voltage.

3. A magnetic bearing control device according to claim 1 or 2, wherein an index by which said inverter selects between the PWM and PAM control modes is at least one of a duty ratio in the PWM and an output voltage of said inverter.

4. A magnetic bearing control device according to claim 1, further comprising:
a driver (16) for the bearing for driving said electromagnets; and
a DC/DC converter (13) for supplying a driving power to said inverter (14) and said driver (16) for the bearing,
wherein said DC/DC converter (13) outputs, to said driver (16) for the bearing, a voltage equal to a magnetic bearing supporting voltage required for supporting said suspended object without contact.
